# EUROPEAN PATENT APPLICATION

(11) **EP 4 083 866 A1**
(43) Date of publication of application: **02.11.2022**
(21) Application number: 20905145.7
(22) Date of filing: 30.09.2020
(51) Int. Cl.: G06N 3/04, G06N 20/00

(54) **INFORMATION PROCESSING DEVICE, METHOD, AND PROGRAM**

(30) Priority: 24.12.2019 JP 2019233427
(71) Applicant: Aising Ltd., Tokyo 107-0052 (JP)
(72) Inventor: IDESAWA, Junichi, Tokyo 107-0052 (JP); SUGAWARA, Shimon, Tokyo 107-0052 (JP)
(74) Representative: Kilian Kilian & Partner
(86) International application number: PCT/JP2020/037104
(87) International publication number: WO 2021/131210

(57) **Abstract**

[Problem to be Solved]

An object is to provide machine learning technology that can adapt to changes in the features of a model while ensuring a certain level of output accuracy.

[Solution]

An information processing device comprising: a reference input data acquisition unit; a first output data generating unit that generates first output data by inputting the reference input data to a first approximation function generated based on training input data and training correct data; a second output data generating unit that generates second output data by inputting the reference input data to a second learned model generated by performing machine learning based on the training input data and difference data between output data generated by inputting the training input data to the first approximation function, and the training correct data; a final output data generating unit that generates final output data based on the first output data and the second output data; a reference correct data acquisition unit; and an update unit that updates the second learned model by performing machine learning based on difference data between the first output data and the reference correct data, and the reference input data, is provided.

## Description

### Technical Field

The present invention relates to machine learning technology, particularly to a device and the like including a learning model.

### Background Art

In recent years, machine learning technology has been used to control various devices, such as devices in factories.

The most common design method for applying machine learning technology to this type of device is to acquire the features of the target device in advance, perform machine learning (offline learning) based on the features in advance to generate a learned model, and then install the learned model in the device. With this method, because it is possible to perform learning based on abundant data prepared in advance, a certain level of output accuracy can be ensured.

However, in the aforementioned configuration with so-called offline learning, if the features of the device change due to aging or other factors, they may differ from the device features obtained by pre-learning and the output accuracy may decrease.

There is another conceivable design (online learning) in which a learning model is installed in a device, and the learning model is updated by sequential machine learning based on the obtained data while the device is operating. With such a method, even when the features of the device change due to deterioration over time, or other causes, it is possible to adaptively deal with it with learning.

However, the output accuracy of the so-called online learning described above is often worse than that of offline learning, posing the risk that the output accuracy is not ensured in the early stage of learning, for example. Besides, if inappropriate data such as outliers are learned, runaway may occur.

It is conceivable that a learned model that has undergone offline learning could be installed in a device, and the learned model could be then further updated by online learning.

However, in this method in which online learning and offline learning are simply used, the additional online learning may affect the model acquired by offline learning, resulting in a decrease in estimation accuracy. For example, depending on the learning model used, so-called catastrophic forgetting (e.g., Non Patent Literature 1) in which the previously acquired model is rapidly lost may occur. For this reason, from the viewpoint of reliability, it is practically difficult to adopt this method.

### Citation List

### Non Patent Literature

Non Patent Literature 1: Robert M. French, "Catastrophic Forgetting in Connectionist Networks: Causes, Consequences, Solutions", [online], May 1999, Quantitative Psycology and Cognitive Science, Department of Psycology, University of Liege, 4000 Liege, Belgium, [December 12, 2019], Website <URL:https://www.researchgate.net/publication/12977135_Ca tastrophic_forgetting_in_connectionist_networks>

### Summary of Invention

### Technical Problem

In other words, machine learning technology that can adapt to changes in model features while ensuring a certain level of output accuracy has not been proposed.

An object of the present invention, which was made in view of the technical background mentioned above, is to provide machine learning technology that can adapt to changes in model features while ensuring a certain level of output accuracy.

Other objects and advantageous effects of the present invention will be easily understood by those skilled in the art by referring to the following description of the specification.

### Solution to Problem

The technical problem mentioned above can be solved by a device, system, method, program, and the like having the following configuration.

In other words, a machine learning device according to the present invention includes: a reference input data acquisition unit that acquires reference input data; a first output data generating unit that generates first output data by inputting the reference input data to a first approximation function generated based on training input data and training correct data corresponding to the training input data; a second output data generating unit that generates second output data by inputting the reference input data to a second learned model generated by performing machine learning based on the training input data and difference data between output data generated by inputting the training input data to the first approximation function, and the training correct data; a final output data generating unit that generates final output data based on the first output data and the second output data; a reference correct data acquisition unit that acquires reference correct data; and an update unit that updates the second learned model by performing machine learning based on difference data between the first output data and the reference correct data, and the reference input data.

With such a configuration, an approximation function that was acquired in advance is used as the first approximation function to generate the first output data, and the second learned model, which generates the second output data corresponding to the difference between the first output data and the correct data, is updated by machine learning as appropriate, so that adaptive machine learning can be performed by online learning for changes in the features of a target model while a certain level of output accuracy is ensured using the approximation function that was acquired in advance. In other words, machine learning technology that can adapt to changes in the features of the target model can be provided while a certain level of output accuracy is ensured.

The first approximation function may be a first learned model generated by performing machine learning based on the training input data and the training correct data.

The first approximation function may be a function that formulates a relationship between the training input data and the training correct data.

The information processing device may further include an output limiting unit that limits the second output data to a predetermined value range.

The information processing device may further include a for-user information generating unit that performs judgement under a predetermined condition based on the second output data and, if the predetermined condition is met, generates predetermined information to be presented to a user.

The information may be information on a timing of maintenance of a device from which the reference input data and the reference correct data have been acquired.

The present invention may also be considered as a system. In other words, an information processing system of the present invention includes a reference input data acquisition unit that acquires reference input data; a first output data generating unit that generates first output data by inputting the reference input data to a first approximation function generated based on training input data and training correct data corresponding to the training input data; a second output data generating unit that generates second output data by inputting the reference input data to a second learned model generated by performing machine learning based on the training input data and difference data between output data generated by inputting the training input data to the first approximation function, and the training correct data; a final output data generating unit that generates final output data based on the first output data and the second output data; a reference correct data acquisition unit that acquires reference correct data; and an update unit that updates the second learned model by performing machine learning based on difference data between the first output data and the reference correct data, and the reference input data.

The present invention may also be considered as a method. In other words, the information processing method of the present invention includes a reference input data acquisition step of acquiring reference input data; a first output data generating step of generating first output data by inputting the reference input data to a first approximation function generated based on training input data and training correct data corresponding to the training input data; a second output data generating step of generating second output data by inputting the reference input data to a second learned model generated by performing machine learning based on the training input data and difference data between output data generated by inputting the training input data to the first approximation function, and the training correct data; a final output data generating step of generating final output data based on the first output data and the second output data; a reference correct data acquisition step of acquiring reference correct data; and an update step of updating the second learned model by performing machine learning based on difference data between the first output data and the reference correct data, and the reference input data.

The present invention may also be considered as a computer program. In other words, a program according to the present invention is a program for causing a computer to function as an information processing device including: a reference input data acquisition unit that acquires reference input data; a first output data generating unit that generates first output data by inputting the reference input data to a first approximation function generated based on training input data and training correct data corresponding to the training input data; a second output data generating unit that generates second output data by inputting the reference input data to a second learned model generated by performing machine learning based on the training input data and difference data between output data generated by inputting the training input data to the first approximation function, and the training correct data; a final output data generating unit that generates final output data based on the first output data and the second output data; a reference correct data acquisition unit that acquires reference correct data; and an update unit that updates the second learned model by performing machine learning based on difference data between the first output data and the reference correct data, and the reference input data.

The present invention can also be considered as a device from another aspect. In other words, the information processing device according to the present invention includes a first learning processing unit that generates a first learned model by performing machine learning based on training input data and training correct data; and a second learning processing unit that generates a second learned model by performing machine learning based on the training input data and difference data between output data generated by inputting the training input data to the first learned model, and the training correct data.

The present invention can also be considered as a method from another aspect. In other words, an information processing method according to the present invention includes a first learning processing step of generating a first learned model by performing machine learning based on training input data and training correct data; and a second learning processing step of generating a second learned model by performing machine learning based on the training input data and difference data between output data generated by inputting the training input data to the first learned model, and the training correct data.

The present invention can also be considered as a program from another aspect. In other words, an information processing program according to the present invention is a program for causing a computer to function as an information processing device including: a first learning processing unit that generates a first learned model by performing machine learning based on training input data and training correct data; and a second learning processing unit that generates a second learned model by performing machine learning based on the training input data and difference data between output data generated by inputting the training input data to the first learned model, and the training correct data.

The present invention can also be considered as a method from another aspect. In other words, a method according to the present invention includes a first learning processing step of generating a first learned model by performing machine learning based on training input data and training correct data; a second learning processing step of generating a second learned model by performing machine learning based on the training input data and difference data between output data generated by inputting the training input data to the first learned model, and the training correct data; and a learned model installing step of installing a predetermined device with the first learned model and the second learned model so that the second learned model can be updated based on data acquired from the device.

### Advantageous Effect of Invention

According to the present invention, machine learning technology that can adapt to changes in model features while ensuring a certain level of output accuracy can be provided.

### Brief Description of Drawings

[Figure 1] Figure 1 is a diagram of the hardware configuration of an information processing device.
[Figure 2] Figure 2 is a diagram of the hardware configuration of a braking distance estimating device.
[Figure 3] Figure 3 is a general flowchart according to a first embodiment.
[Figure 4] Figure 4 is a detailed flowchart of a pre-learning processing.
[Figure 5] Figure 5 is a conceptual diagram of the pre-learning processing.
[Figure 6] Figure 6 is a detailed flowchart of an actual operation process.
[Figure 7] Figure 7 is a conceptual diagram of a process for integrating estimation outputs.
[Figure 8] Figure 8 is a conceptual diagram of online learning.
[Figure 9] Figure 9 is an explanatory diagram showing a relationship between a true value and estimation outputs.

### Description of Embodiment

An embodiment of the present invention will be described in detail below with reference to the accompanying drawings.

### (1. First embodiment)

### (1.1 Hardware Configuration)

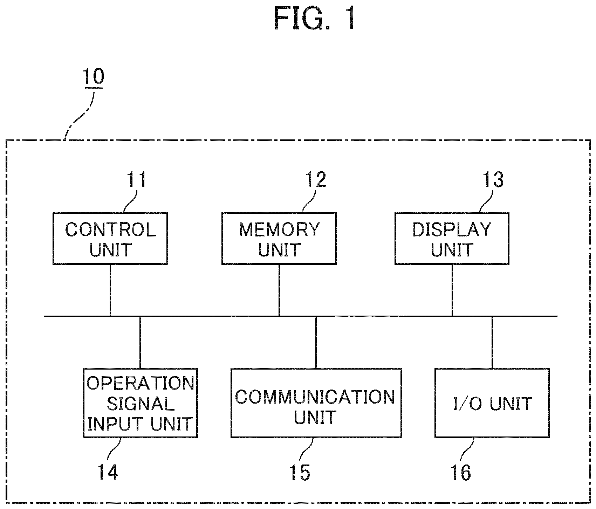

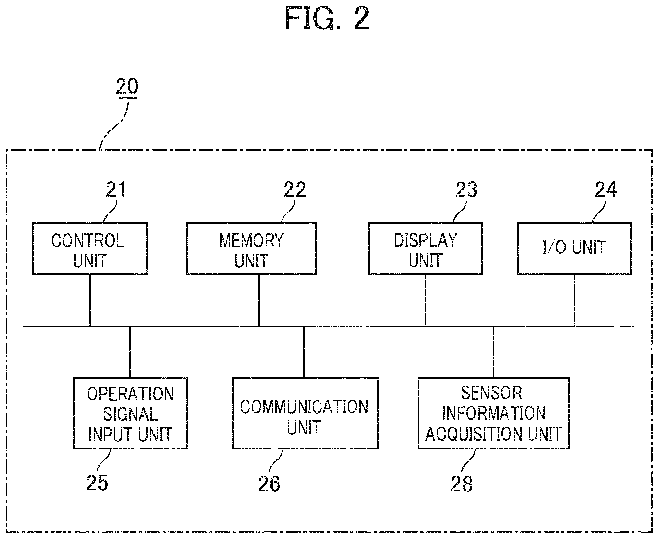

A hardware according to this embodiment will now be described with reference to Figures 1 and 2.

Figure 1 is a diagram of the hardware configuration of an information processing device 10 capable of performing a machine learning processing to generate a learned model. As is clear from the drawing, it includes a control unit 11, a memory unit 12, a display unit 13, an operation signal input unit 14, a communication unit 15, and an I/O unit 16, which are connected together via a bus.

The control unit 11 is a control device, such as a CPU or GPU, and is used to execute programs for various operations which will be explained below. For example, it performs control over the entire information processing device 10 and learning processing or estimation processing. The memory unit 12 is a volatile or non-volatile memory device, such as ROM or RAM, storing, for example, training data to be learned, including training input data and correct data, a machine learning program, and an estimation program. The display unit 13 is connected to a display or the like to control display and provide a GUI to the user through the display or the like. The operation signal input unit 14 processes signals input via the keyboard, touch panel, buttons, and other input units. The communication unit 15 is a communication chip or the like that communicates with external devices on the Internet, LAN, or the like. The I/O unit 16 is a device that performs processing for information input/output to/from external devices.

Figure 2 is a diagram of the hardware configuration of a device installed with a learned model that has been learned offline, in this embodiment, a braking distance estimating device 20 that is installed in a vehicle or the like and estimates the braking distance of the vehicle, for example. Although the braking distance estimating device 20 is employed in this embodiment, the device to be installed is not limited to such a device. Therefore, it can be applied to any devices such as machine tools and robots, for example.

As is clear from the drawing, it includes a control unit 21, a memory unit 22, a display unit 23, an operation signal input unit 24, a communication unit 25, and an I/O unit 26, which are connected together via a bus.

The control unit 21 is a control device such as a CPU or GPU and is used to execute programs for various operations which will be explained below. For example, it performs control over the entire information processing device 20 and learning processing or estimation processing. The memory unit 22 is a volatile or non-volatile memory device, such as ROM or RAM, storing, for example, a learned model, training data to be learned, including training input data and correct data, a machine learning program, and an estimation program. The display unit 23 is connected to a display or the like to control display and provide a GUI to the user through the display or the like. The I/O unit 24 is a device that performs processing for information input/output to/from external devices. The operation signal input unit 25 processes signals input via the keyboard, touch panel, buttons, and other input units. The communication unit 26 is a communication unit or the like that communicates with other components on the vehicle. The sensor information acquisition unit 28 acquires various types of sensor information on the vehicle, for example, the rotation speed of the tires.

The hardware configuration is not limited to the configuration according to this embodiment, and its configuration and functions may be distributed or integrated. For example, processing may be performed in a distributed manner by multiple information processing devices 1, or a large-capacity memory device may be externally added and connected to the information processing devices 1. In addition, ICs, especially ASICs and FPGAs, can be used to perform circuit-based processing.

### (1.2) Operation

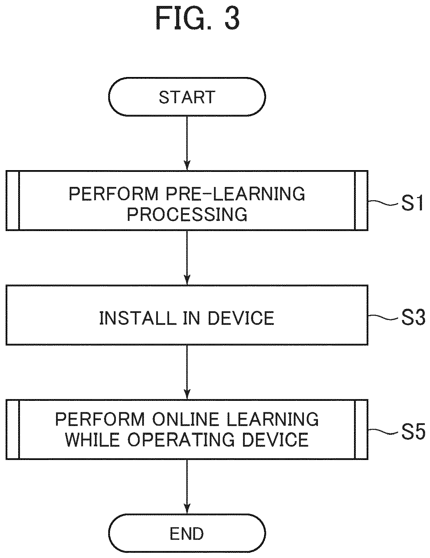

The operation of the information processing device 10 and the braking distance estimating device 20 will now be explained with reference to Figures 3 to 9.

Figure 3 is a general flowchart showing the flow of processing according to this embodiment. As is clear from the drawing, upon start of the processing, preprocessing for machine learning, that is, pre-learning processing is performed for a learning model to be installed in the braking distance estimating device 20, on the information processing device 10 (S1).

After this pre-learning processing, processing is performed for installing the learned model for offline learning and the learned model for online learning that have been obtained through the pre-learning processing, into a target device which is the braking distance estimating device 20 in this embodiment (S3).

After this installment, actual operation processing is performed in which while the braking distance estimating device 20 is operated, online learning is performed based on actual data obtained from the device (S5). Afterwards, the processing ends when the predetermined ending conditions are met. In this embodiment, online learning is to update, on the device, the parameters and the like of a learning model installed in the device, through machine learning based on the data obtained in the device. Here, the update cycle can be designed in various ways: for example, sequential learning following the control cycle of the device, or batch learning or mini-batch learning performed after a predetermined amount of data to be learned is accumulated may be adopted.

### (1.2.1 Details of Pre-Learning Processing)

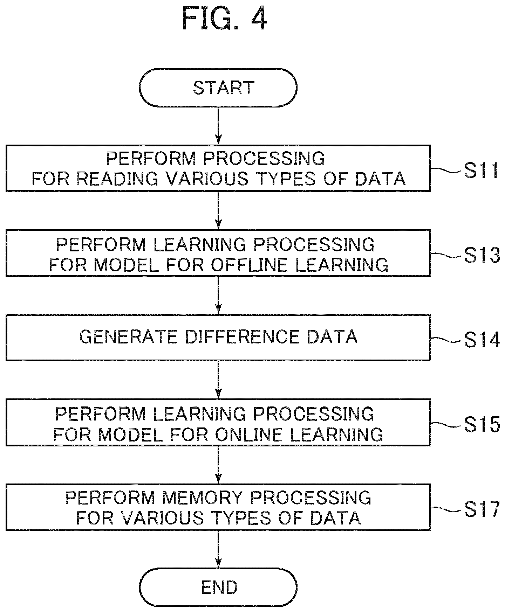

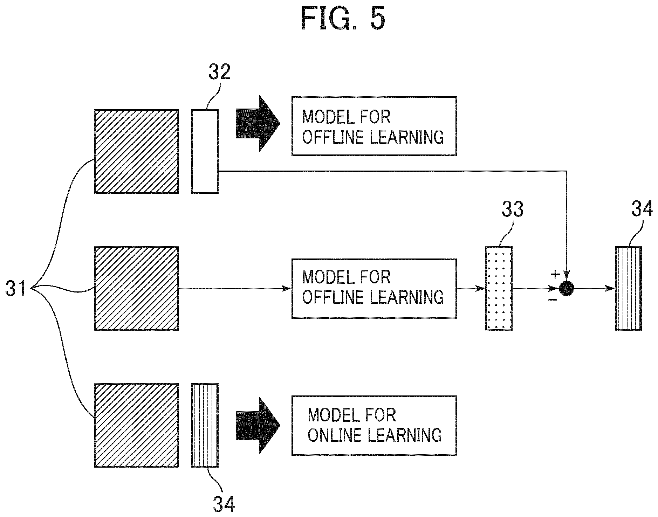

The details of the pre-machine learning processing will now be explained with reference to Figures 4 and 5.

Figure 4 is a detailed flowchart of the pre-learning processing, and Figure 5 is a conceptual diagram of the pre-learning processing.

As is clear from Figure 4, when the pre-learning processing starts, processing is performed for reading various types of data such as a learning model and its parameters, and a training data set consisting of training input data and training correct data (S11). Note that the training data is, for example, data that has been actually obtained beforehand from the device to be installed. In this embodiment, the training input data is the rotation speed of the tires at the beginning of braking, and the training correct data is the braking distance, i.e., the number of the rotation of the tires until the tires actually stop.

After that, supervised learning is performed on the model for offline learning based on the training data set that has been read (S13). In this embodiment, a neural network is employed as the model for offline learning.

A conceptual representation of this learning processing is shown in the uppermost drawing of Figure 5. In particular, a data set of training data consisting of training input data 31 and training correct data 32 is input to the model for offline learning to perform the learning processing. Consequently, a learned model is generated by offline learning based on the training data set. This learned model outputs the estimated braking distance (number of rotations counted until the tires stop) using the rotation speed of the tires at the beginning of braking as an input.

Note that the model for offline learning is not limited to the learned model of this embodiment. Thus, for example, a random forest or a learning tree (see Japanese Patent Laid-Open No. 2016-173686, for example) or a combination of such algorithms may be employed as an algorithm.

After this learned model is generated, processing is performed for generating difference data (S14). To be specific, processing is performed for calculating the difference between the output (estimation result) of the training data input to the generated learned model and the training correct data.

Processing for generating this difference data is conceptually shown in the middle drawing of Figure 5. In other words, the difference between the output data 33 of the training input data 31 input to the learned model generated by offline learning, and the training correct data 32 is calculated, thereby generating difference data 34.

After this processing for generating the difference data, learning processing is performed for the model for online learning (S15). In other words, the model for online learning is learned using the training input data and the difference data.

A conceptual representation of this learning processing for the model for online learning is shown in the lowermost drawing of Figure 5. In particular, machine learning is performed on the model for online learning with the use of the training input data 31 and the difference data 34, thereby generating a learned model for online learning. This learned model outputs the estimated difference data, using the rotation speed of the tires at the beginning of braking as an input.

Note that the model for online learning is, in this embodiment, a learning tree (see Japanese Patent Laid-Open No. 2016-173686, for example). In the learning processing using the learning tree, input data is associated with and accumulated in each state space that is branched hierarchically according to branching conditions. The estimation output is calculated by taking the additive average of the output values or output vectors corresponding to the respective pieces of data contained in the state spaces after learning. With this configuration, the learning tree is suitable for online learning.

The model for online learning is not limited to the learning model of this embodiment. Accordingly, for example, a passive aggressive (PA) algorithm, neural networks, and other algorithms may be employed.

After the learning processing for the model for online learning is completed, processing is performed for storing various types of data, including both the learned model that has undergone offline learning and the learned model that has undergone online learning, in the memory unit 12 (S17), and the pre-learning processing then ends.

### (1.2.2 Details of Actual Operation Processing)

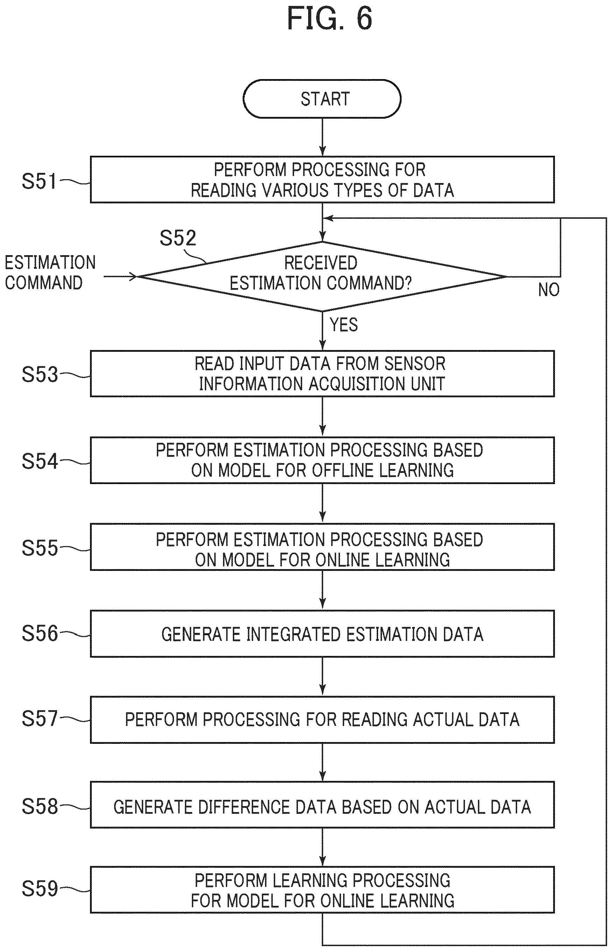

Referring to Figures 6 to 8, the details of the actual operation processing (S5) in the vehicle braking distance estimating device 20 will now be described.

Figure 6 is a detailed flowchart of the actual operation processing. As is clear from the drawing, upon start of the processing, processing for reading the learned model, and the like acquired by the pre-learning is performed (S51).

After that, the braking distance estimating device 20 goes on standby until it receives an estimation command related to the braking distance (S52:NO). In this state, upon reception of an estimation command related to the braking distance (S52:YES), sensor information is read from the sensor information acquisition unit 28 to be input data to each learned model (S53).

An estimation command is, for example, a signal issued from another system and indicating the fact that braking has begun to be applied to the vehicle. In this embodiment, a sensor is rotation speed detecting sensor that detects the rotation speed of the tires of the vehicle. Although a rotation speed is employed as a sensor input in this embodiment, other data may be used instead. Accordingly, data corresponding to the road surface environment, for example, may be employed instead.

Next, processing is performed for giving output data, i.e., estimated braking distance (rotation speed until halting) based on the learned model for offline learning, using the rotation speed of the tires acquired through the sensor as an input (S54). Similarly, processing is performed for generating the estimated difference data between the estimated braking distance and the correct value based on the learned model for online learning, using the rotation speed of the tires acquired through the sensor as an input (S55).

After the estimated braking distance and the estimated difference data are generated, processing for integrating these estimated outputs is performed to calculate the final estimated braking distance (S56).

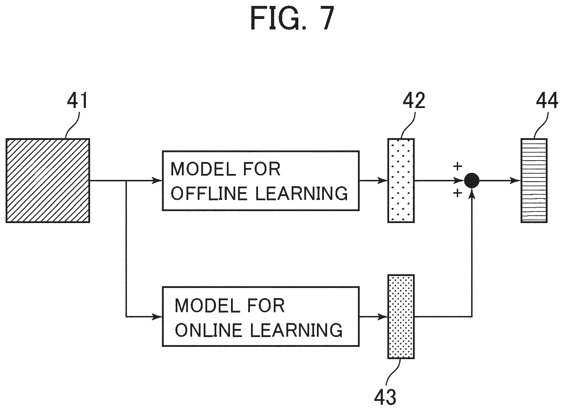

Figure 7 is a conceptual diagram of the aforementioned processing for integrating estimated outputs. As is clear from the drawing, the same input data 41, that is, the rotation speed of the tires at a given point in time, is provided to the learned model for offline learning and the learned model for online learning. Upon reception of this input data, each learned model outputs the estimated braking distance data 42 and the estimated difference data 43. After that, the estimated braking distance data 42 and the estimated difference data 43 are added together and integrated to calculate the final estimated braking distance.

With this configuration, the braking distance until the halting of the vehicle can be estimated at the moment the brakes are applied, taking into account, for example, changes in the features of the brakes and the vehicle body. This makes it possible, for example, to control the vehicle body using the estimated braking distance.

Referring back to Figure 6, after the integrated estimation data is generated, the braking distance estimating device 20 performs processing for reading the actual braking distance (S57) and generating the difference data based on the actual braking distance data (S58). In other words, processing for generating the difference data between the estimated braking distance generated from the learned model for offline learning and the actual braking distance data is performed.

Based on this difference data and the input data, machine learning is performed on the learned model for online learning to update the learned model for online learning (S59). After that, it again goes on standby for waiting for an estimation command and the series of processing (S52 to S59) is repeated.

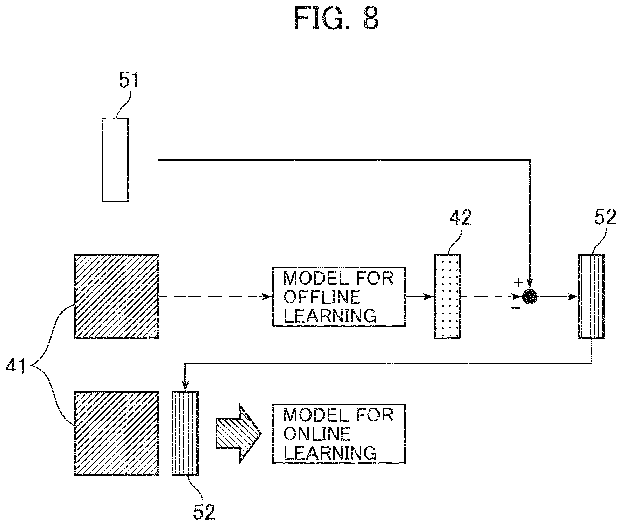

Figure 8 is a conceptual diagram of the online learning described above. As is clear from the drawing, input data 41 acquired from the sensor is input to the learned model for offline learning, and predetermined output data 42 corresponding to the estimated braking distance is generated from the learned model. Difference data 52 is generated from the difference between this output data 42 and the actual braking distance data 51 that has been acquired from the sensor. Based on this difference data 52 and the input data 41, processing for updating the learned model for online learning is performed using machine learning.

With this configuration, adaptive machine learning can be performed by online learning for changes in the features of the target, while a certain level of output accuracy is ensured by using an approximation function acquired in advance. In other words, machine learning technology that can adapt to changes in the features of the target can be provided while a certain level of output accuracy is ensured.

### (1.2.3 Others)

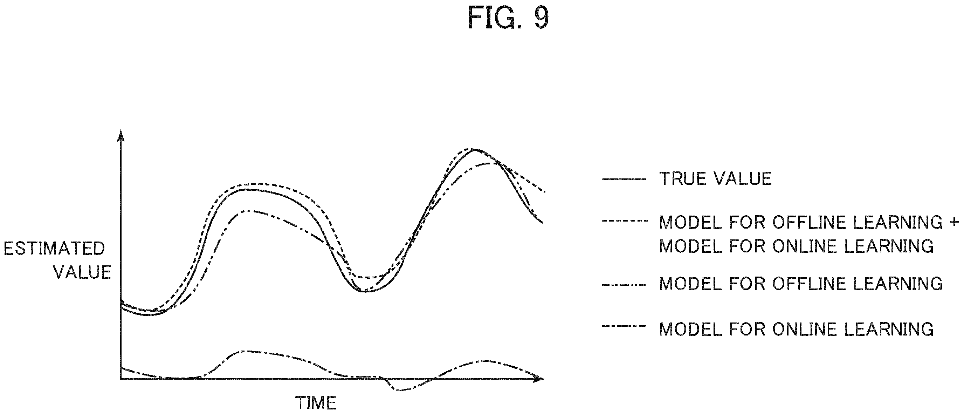

Figure 9 is an explanatory diagram showing an example relationship between a true value and estimation outputs. The horizontal axis indicates time and the vertical axis indicates the output value (estimated value). It is clear from the drawing that the curve that most closely approximates the true value (correct value) indicated by the solid line is the dashed line which represents the integrated output obtained by adding together the output of the learned model for offline learning and the output of the learned model for online learning.

Although the integrated output (dashed line) consists of the output of the learned model for offline learning (double-dotted line) and the output of the learned model for online learning (single-dotted line), it is clear from the drawing that the output of the learned model for offline learning is dominant and the percentage of the output of the learned model for online learning is small.

In other words, while the learned model for offline learning is used for rough estimation, the learned model for online learning is used to adjust the difference. This allows adaptive learning to be performed while the influence of the learned model for online learning, which is generally not expected to be as accurate as offline learning, is suppressed. This means that machine learning technology that can adapt to changes in the features of the target can be provided while a certain level of output accuracy is ensured.

### (2 Variation)

In the aforementioned embodiment, the output of the learned model for offline learning and the output of the learned model for online learning are added together, which configuration is not necessarily the case in the present invention. Accordingly, for example, a certain limit may be imposed for the output of the learned model for online learning. For example, upper and lower limits may be set for the output of the learned model for online learning.

A braking distance estimating device is employed as a device to be installed with learned models in the aforementioned embodiment, which configuration is not necessarily the case in the present invention. Accordingly, for example, it can be installed in all kinds of devices such as machine tools and robots in a factory. In addition, any kind of data can be employed as the learning target.

In the aforementioned embodiment, a configuration is employed in which pre-learning is performed for both models for offline learning and online learning. However, this configuration is not necessarily the case in present invention. Accordingly, for example, the model for online learning may be configured to proceed with learning after the device is installed without pre-learning.

An approximation function (learned model) is generated by offline learning in the aforementioned embodiment, which configuration is not necessarily the case in the present invention. Accordingly, for example, a formulated approximation function may be used without machine learning.

The models for offline learning and online learning are each described as being generated using a single model, such as a neural network, in the aforementioned embodiment, which configuration is not necessarily the case in the present invention. Accordingly, for example, multiple learning models that are identical or different may be used in combination to construct the respective models. In other words, for example, both a neural network and random forest may be used in combination to be configured as models for offline learning.

Although an example of output estimation based on a learned model for online learning and a learned model for offline learning is explained in the aforementioned embodiment, the use of these learned models is not always like in such an example. Accordingly, for example, judgment can be made under a predetermined condition based on the output of the learned model for online learning, and the user may be notified of the changes that have occurred in the device and the related information. For instance, when the condition is met, the control over the device may be stopped, or the user may be informed of an alert. For instance, a predetermined error message or the timing of maintenance for the device may be notified.

The condition for the judgment may be, for example, whether or not the output of the learned model for online learning exceeds a predetermined threshold. The condition may also be the percentage or frequency that exceed the predetermined threshold.

### Industrial Applicability

The present invention can be used in various industries that use machine learning technology.

### Reference Signs List

- 10: Information processing device
- 11: Control unit
- 12: Memory unit
- 13: Display unit
- 14: Operation signal input unit
- 15: Communication unit
- 16: I/O unit
- 20: Braking distance estimating device
- 21: Control unit
- 22: Memory unit
- 23: Display unit
- 24: I/O unit
- 25: Operation signal input unit
- 26: Communication unit
- 28: Sensor information acquisition unit

## Claims

1. An information processing device comprising:
a reference input data acquisition unit that acquires reference input data;
a first output data generating unit that generates first output data by inputting the reference input data to a first approximation function generated based on training input data and training correct data corresponding to the training input data;
a second output data generating unit that generates second output data by inputting the reference input data to a second learned model generated by performing machine learning based on the training input data and difference data between output data generated by inputting the training input data to the first approximation function, and the training correct data;
a final output data generating unit that generates final output data based on the first output data and the second output data;
a reference correct data acquisition unit that acquires reference correct data; and
an update unit that updates the second learned model by performing machine learning based on difference data between the first output data and the reference correct data, and the reference input data.

2. The information processing device according to Claim 1, wherein the first approximation function is a first learned model generated by performing machine learning based on the training input data and the training correct data.

3. The information processing device according to Claim 1, wherein the first approximation function is a function that formulates a relationship between the training input data and the training correct data.

4. The information processing device according to Claim 1, further comprising an output limiting unit that limits the second output data to a predetermined value range.

5. The information processing device according to Claim 1, further comprising a for-user information generating unit that performs judgement under a predetermined condition based on the second output data and, if the predetermined condition is met, generates predetermined information to be presented to a user.

6. An information processing device according to Claim 5, wherein the information is information on a timing of maintenance of a device from which the reference input data and the reference correct data have been acquired.

7. An information processing system comprising:
a reference input data acquisition unit that acquires reference input data;
a first output data generating unit that generates first output data by inputting the reference input data to a first approximation function generated based on training input data and training correct data corresponding to the training input data;
a second output data generating unit that generates second output data by inputting the reference input data to a second learned model generated by performing machine learning based on the training input data and difference data between output data generated by inputting the training input data to the first approximation function, and the training correct data;
a final output data generating unit that generates final output data based on the first output data and the second output data;
a reference correct data acquisition unit that acquires reference correct data; and
an update unit that updates the second learned model by performing machine learning based on difference data between the first output data and the reference correct data, and the reference input data.

8. An information processing method comprising:
a reference input data acquisition step of acquiring reference input data;
a first output data generating step of generating first output data by inputting the reference input data to a first approximation function generated based on training input data and training correct data corresponding to the training input data;
a second output data generating step of generating second output data by inputting the reference input data to a second learned model generated by performing machine learning based on the training input data and difference data between output data generated by inputting the training input data to the first approximation function, and the training correct data;
a final output data generating step of generating final output data based on the first output data and the second output data;
a reference correct data acquisition step of acquiring reference correct data; and
an update step of updating the second learned model by performing machine learning based on difference data between the first output data and the reference correct data, and the reference input data.

9. A program for causing a computer to function as an information processing device comprising:
a reference input data acquisition unit that acquires reference input data;
a first output data generating unit that generates first output data by inputting the reference input data to a first approximation function generated based on training input data and training correct data corresponding to the training input data;
a second output data generating unit that generates second output data by inputting the reference input data to a second learned model generated by performing machine learning based on the training input data and difference data between output data generated by inputting the training input data to the first approximation function, and the training correct data;
a final output data generating unit that generates final output data based on the first output data and the second output data;
a reference correct data acquisition unit that acquires reference correct data; and
an update unit that updates the second learned model by performing machine learning based on difference data between the first output data and the reference correct data, and the reference input data.

10. An information processing device comprising:
a first learning processing unit that generates a first learned model by performing machine learning based on training input data and training correct data; and
a second learning processing unit that generates a second learned model by performing machine learning based on the training input data and difference data between output data generated by inputting the training input data to the first learned model, and the training correct data.

11. An information processing method comprising:
a first learning processing step of generating a first learned model by performing machine learning based on training input data and training correct data; and
a second learning processing step of generating a second learned model by performing machine learning based on the training input data and difference data between output data generated by inputting the training input data to the first learned model, and the training correct data.

12. A program for causing a computer to function as an information processing device comprising:
a first learning processing unit that generates a first learned model by performing machine learning based on training input data and training correct data; and
a second learning processing unit that generates a second learned model by performing machine learning based on the training input data and difference data between output data generated by inputting the training input data to the first learned model, and the training correct data.

13. A learned model application method comprising:
a first learning processing step of generating a first learned model by performing machine learning based on training input data and training correct data;
a second learning processing step of generating a second learned model by performing machine learning based on the training input data and difference data between output data generated by inputting the training input data to the first learned model, and the training correct data; and
a learned model installing step of installing a predetermined device with the first learned model and the second learned model so that the second learned model can be updated based on data acquired from the device.
